# EUROPÄISCHE PATENTSCHRIFT

(11) **EP 2 002 151 B1**
(45) Veröffentlichungstag und Bekanntmachung des Hinweises auf die Patenterteilung: **11.05.2011**
(21) Anmeldenummer: 07711207.6
(22) Anmeldetag: 23.02.2007
(51) Int. Cl.: F16H 41/28, F16H 41/26

(54) **ZWEITEILIGE STATORSCHAUFEL**
TWO-PIECE STATOR BLADE
AUBE DE TURBINE EN DEUX PARTIES

(30) Priorität: 24.03.2006 US 785739 P
(43) Veröffentlichungstag der Anmeldung: 17.12.2008
(73) Patentinhaber: Schaeffler Technologies GmbH & Co. KG, 91074 Herzogenaurach (DE)
(72) Erfinder: BREES, William, 44691 Wooster, OHIO (US); SHAMIE, Christopher, Wadsworth, OH 44281 (US); KARAMAVRUC, Aliihsan, 44961 Wooster (US)
(86) Internationale Anmeldenummer: PCT/DE2007/000354
(87) Internationale Veröffentlichungsnummer: WO 2007/110019

(56) Entgegenhaltungen:
- EP-A2- 0 276 411
- WO-A-2004/020874
- DE-A1- 3 931 427
- DE-B- 1 193 758
- GB-A- 2 042 690
- US-A- 2 755 628
- US-A- 3 014 430
- US-A- 3 244 400
- US-A- 3 354 643
- US-A- 3 572 034

## Beschreibung

### GEBIET DER ERFINDUNG

Die Erfindung betrifft Verbesserungen an einer Vorrichtung zur Kraftübertragung zwischen einer rotatorischen Antriebseinheit (zum Beispiel dem Motor eines Motorfahrzeugs) und einer rotatorisch angetriebenen Einheit (zum Beispiel dem Automatikgetriebe in dem Motorfahrzeug). Insbesondere betrifft die Erfindung eine Statorschaufel mit zwei separat gebildeten axialen Segmenten für einen Drehmomentwandler. Speziell weist der Stator gestanzte axiale Hälften auf, und die Segmente sind als integraler Bestandteil der jeweiligen Hälften gebildet.

### HINTERGRUND DER ERFINDUNG

Einteilige Schaufeln in Statoren sind bekannt. Zweiteilige Statorschaufeln sind ebenfalls bekannt, wie sie zum Beispiel in der US-Patentanmeldung Nr. US 2004/0 237 516 A1 (Shin) oder in der Offenlegungsschrift DE 39 31 427 A1beschrieben werden. Leider sind die Schaufelsegmente von Shin in radialer Richtung voneinander getrennt. Das heißt, ein Segment ist mit einem äußeren Umfang des Stators verbunden, und das andere Segment ist mit einem inneren Umfang des Stators verbunden. Somit beschränkt sich die Einflussnahme auf den Flüssigkeitsstrom durch die Schaufeln im Wesentlichen auf die Strömung entlang radialer Ebenen.

Die Offenlegungsschrift DE 39 31 427 A1 zeigt die Anordnung von zwei axial benachbarten Statoren, wobei zwischen den Statoren axial ein Spalt gebildet ist.

Somit besteht seit langem ein Bedarf an einem Stator, der Schaufeln mit axialen Segmenten aufweist.

### KURZE ZUSAMMENFASSUNG DER ERFINDUNG

Die vorliegende Erfindung umfasst im Allgemeinen eine Schaufel für einen Stator in einem Drehmomentwandler, die ein mit inneren und äußeren Umfangsabschnitten des Stators verbundenes erstes Schaufelsegment und ein separat vom ersten Schaufelsegment gebildetes und mit den inneren und äußeren Umfangsabschnitten verbundenes zweites Schaufelsegment beinhaltet. Gemäß einigen Aspekten berühren sich das erste und das zweite Schaufelsegment, das erste und das zweite Schaufelsegment beinhalten entsprechende Kanten, und das erste und das zweite Schaufelsegment berühren sich an den entsprechenden Kanten, oder mindestens eine der entsprechenden ersten Kanten ist keilförmig angeschrägt. Gemäß einigen Aspekten beinhalten das erste und das zweite Schaufelsegment entsprechende Flächen, und die entsprechenden Flächen überlappen sich zumindest teilweise, oder die ersten und die zweiten Schaufelsegmente sind über den Umfang hinweg gegeneinander versetzt. Gemäß einigen Aspekten sind das erste oder das zweite Schaufelsegment zumindest teilweise gefaltet und die Schaufel ist gestanzt.

Gemäß einigen Aspekten beinhaltet der Stator Leistungskenndaten, die ersten und zweiten Schaufelsegmente befinden sich entsprechenden Anordnungen, und die entsprechenden Anordnungen werden so gewählt, dass sie die Leistungskenndaten verändern, Gemäß einigen Aspekten werden unter anderem Leistungskenndaten wie das Drehmomentverhältnis, der Wirkungsgrad und die Leistung und unter anderem Anordnungen wie eine axiale Anordnung, eine radiale Anordnung und eine Anordnung über den Umfang hinweg gewählt.

Gemäß einigen Aspekten sind die ersten und die zweiten Schaufelsegmente über den Umfang hinweg ausgerichtet, und der Stator beinhaltet ein Ausrichtungselement, das funktionell so angeordnet ist, dass es die Ausrichtung über den Umfang hinweg steuert. Gemäß einigen Aspekten beinhaltet der Drehmomentwandler eine Flüssigkeit, und das Ausrichtungselement ist so angeordnet, dass es die Ausrichtung als Reaktion auf den Druck der Flüssigkeit auf die Schaufel steuert.

Gemäß einigen Aspekten beinhaltet der Stator eine erste axiale Hälfte und eine zweite axiale Hälfte, die erste und die zweite axiale Hälfte sind separat voneinander gebildet und fest miteinander verbunden, das erste Schaufelsegment ist mit der ersten axialen Hälfte verbunden, und das zweite Schaufelsegment ist mit der zweiten axiaien Hälfte verbunden. Zur festen Verbindung werden Niete, gefaltete Zungen, Schweißnähte, Klebstoffe bzw. Sicken gewählt. Gemäß einigen Aspekten ist das erste Schaufelsegment als integraler Bestandteil der ersten axialen Hälfte gebildet, und das zweite Schaufelsegment ist als integraler Bestandteil der zweiten axialen Hälfte gebildet.

Ferner umfasst die vorliegende Erfindung im Allgemeinen eine Schaufel für einen Stator in einem Drehmomentwandler, die ein erstes Schaufelsegment beinhaltet, das als integraler Bestandteil zusammen mit den inneren und den äußeren Umfangsabschnitten des Stators gebildet ist, und die ein zweites Schaufelsegment beinhaltet, das getrennt vom ersten Schaufelsegment und als integraler Bestandteil zusammen mit den inneren und äußeren Umfangsabschnitten gebildet ist.

Ferner umfasst die vorliegende Erfindung im Allgemeinen eine Schaufel für einen Stator in einem Drehmomentwandler, die ein erstes Schaufelsegment beinhaltet, das als integraler Bestandteil zusammen mit einer ersten axialen Hälfte des Stators gebildet und mit ersten inneren und äußeren Umfangsabschnitten der ersten axialen Hälfte verbunden ist, und die ein zweites Schaufelsegment beinhaltet, das getrennt vom ersten Schaufelsegment und als integraler Bestandteil zusammen mit einer zweiten axialen Hälfte des Stators gebildet und mit zweiten inneren und äußeren Umfangsabschnitten der zweiten axialen Hälfte verbunden ist. Die erste und die zweite axiale Hälfte sind getrennt voneinander gebildet und fest miteinander verbunden.

Eine allgemeine Aufgabe der vorliegenden Erfindung besteht darin, eine Schaufel für einen Stator bereitzustellen, die in einer großen Vielfalt von Anordnungen gebildet werden kann.

Eine weitere Aufgabe der vorliegende Erfindung besteht darin, eine Schaufel für einen Stator bereitzustellen, die aus axial voneinander getrennten Segmenten gebildet werden kann.

Noch eine weitere Aufgabe der vorliegenden Erfindung besteht darin, eine aus mehreren Segmenten bestehende Schaufel für einen Stator mit variablem Versatz zwischen den Segmenten bereitzustellen.

Diese sowie weitere Aufgaben und Vorteile der vorliegenden Erfindung werden aus der folgenden Beschreibung bevorzugter Ausführungsarten der Erfindung und den beiliegenden Zeichnungen und Ansprüchen klar.

### KURZBESCHREIBUNG DER ZEICHNUNGEN

Im Folgenden werden im Rahmen der folgenden detaillierten Beschreibung der Erfindung in Verbindung mit den beiliegenden Zeichnungen das Wesen und die Funktionsweise der vorliegenden Erfindung ausführlich beschrieben, wobei:
Fig. 1 eine perspektivische Vorderansicht eines Stators mit einer zweiteiligen Schaufel gemäß der vorliegenden Erfindung ist;
Fig. 2 eine Vorderansicht des Stators in Fig. 1 in Explosionsdarstellung ist;
Fig. 3 eine Vorderansicht des Stators in Fig. 1 ist;
Fig. 4 eine seitliche Querschnittsansicht des Stators in Fig. 3 entlang der Schnittlinie 4-4 in Fig. 3 ist;
Fig. 5 eine Querschnittsansicht des Stators in Fig. 4 von hinten entlang der Schnittlinie 5-5 in Fig. 4 ist;
die Figuren 6 bis 9 Teilquerschnittsansichten von Statoren mit Schaufeln gemäß der vorliegenden Erfindung sind, die Anordnungen entsprechender Statoren und Schaufeln zeigen;
die Figuren 10 bis 17 Draufsichten auf Schaufeln gemäß der vorliegenden Erfindung sind, die verschiedene Anordnungen der Schaufeln zeigen;
Fig. 18A eine perspektivische Ansicht eines Zylinderkoordinatensystems ist, welche die in der vorliegenden Patentanmeldung gebrauchte räumliche Bezeichnungsweise verdeutlicht.
Fig. 18B eine perspektivische Ansicht eines Objektes in dem Zylinderkoordinatensystem von Fig. 18A ist, die die bei der vorliegenden Erfindung verwendete Bezeichnungsweise verdeutlicht.

### DETAILLIERTE BESCHREIBUNG DER ERFINDUNG

Von vornherein sollte klar sein, dass gleiche Bezugsnummern in verschiedenen Zeichnungsansichten identische oder funktionell ähnliche Strukturelemente der Erfindung bezeichnen. Obwohl die vorliegende Erfindung unter Bezug auf die gegenwärtig als bevorzugt angesehenen Aspekte beschrieben wird, sollte klar sein, dass die beanspruchte Erfindung nicht auf die beschriebenen Aspekte beschränkt ist.

Außerdem sollte klar sein, dass die vorliegende Erfindung nicht auf die bestimmten beschriebenen Verfahren, Materialien und Modifikationen beschränkt ist und insofern natürlich variieren kann. Ferner ist klar, dass die hier gebrauchte Terminologie nur zur Beschreibung bestimmte Aspekte dient und nicht als Einschränkung des Geltungsbereichs der vorliegenden Erfindung zu verstehen ist, der nur durch die angehängten Ansprüche beschränkt wird.

Wenn nicht anders definiert, haben alle hier verwendeten technischen und wissenschaftlichen Begriffe dieselbe Bedeutung, wie sie dem Fachmann geläufig sind, an den sich diese Erfindung richtet. Obwohl zum Ausführen oder Testen der Erfindung beliebige Verfahren, Vorrichtungen oder Materialien verwendet werden können, die den hier beschriebenen ähnlich oder gleichwertig sind, werden im Folgenden die bevorzugten Verfahren, Vorrichtungen und Materialien beschrieben.

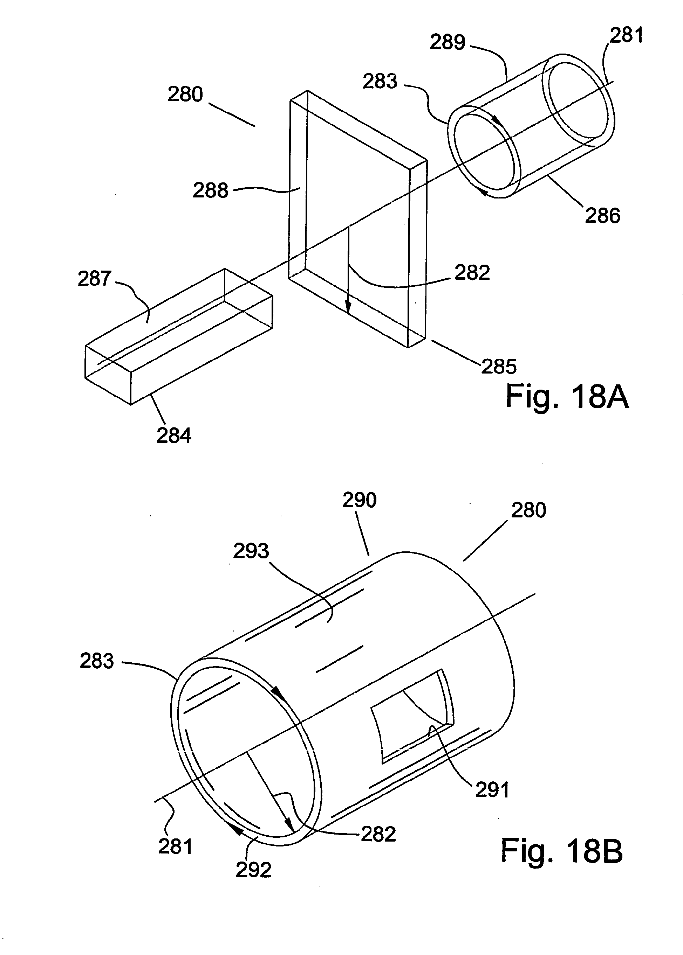

Fig. 18A ist eine perspektivische Ansicht eines Zylinderkoordinatensystems 280, das die in der vorliegenden Patentanmeldung verwendete räumliche Bezeichnungsweise verdeutlicht. Die vorliegende Erfindung wird zumindest teilweise in Verbindung mit einem Zylinderkoordinatensystem beschrieben. Das System 280 weist eine Längsachse 281 auf, die als Bezugselement für die folgenden räumlichen und Richtungsbezeichnungen dient. Die Adjektive "axial", "radial" und "Umfangs-" betreffen eine zur Achse 281 parallele Ausrichtung, einen Radius 282 (der senkrecht zur Achse 281 ist) bzw. einen Umfang 283. Die Adjektive "axial", "radial" und "Umfangs-" betreffen auch eine zu entsprechenden Ebenen parallele Ausrichtung. Zur Klärung der Anordnung der verschiedenen Ebenen dienen die Objekte 284, 285 und 286. Die Fläche 287 des Objekts 284 bildet eine axiale Ebene. Das heißt, die Achse 281 bildet eine Linie entlang der Fläche. Die Fläche 288 des Objekts 285 bildet eine radiale Ebene. Das heißt, der Radius 282 bildet eine Linie entlang der Fläche. Die Fläche 289 des Objekts 286 bildet eine Umfangsfläche. Das heißt, der Umfang 283 bildet eine Linie entlang der Fläche. Als weiteres Beispiel ist zu nennen, dass eine axiale Verschiebung oder Anordnung parallel zur Achse 281 erfolgt, dass eine radiale Verschiebung oder Anordnung parallel zum Radius 282 erfolgt und dass eine Verschiebung oder Anordnung auf dem Umfang parallel zum Umfang 283 erfolgt. Eine Rotation erfolgt um die Achse 281.

Die Adverbien "axial", "radiale und "Umfangs-" beziehen sich auf eine Ausrichtung parallel zur Achse 281, zum Radius 282 bzw. zum Umfang 284. Die Adverbien "axial", "radial" und "Umfangs-" betreffen auch eine zu entsprechenden Ebenen parallele Ausrichtung.

Fig. 18B ist eine perspektivische Ansicht des Objekts 290 im Zylinderkoordinatensystem 280 von Fig. 18A, welche die in der vorliegenden Patentanmeldung gebrauchte räumliche Bezeichnungsweise verdeutlicht. Das zylindrische Objekt 290 stellt ein zylindrisches Objekt in einem Zylinderkoordinatensystem dar und ist in keiner Weise als Einschränkung der vorliegenden Erfindung zu verstehen. Das Objekt 290 beinhaltet eine axiale Fläche 291, eine radiale Fläche 292 und eine Umfangsfläche 293. Die Fläche 291 ist Teil einer axialen Ebene, die Fläche 292 ist Teil einer radialen Ebene, und die Fläche 293 ist Teil einer Umfangsfläche.

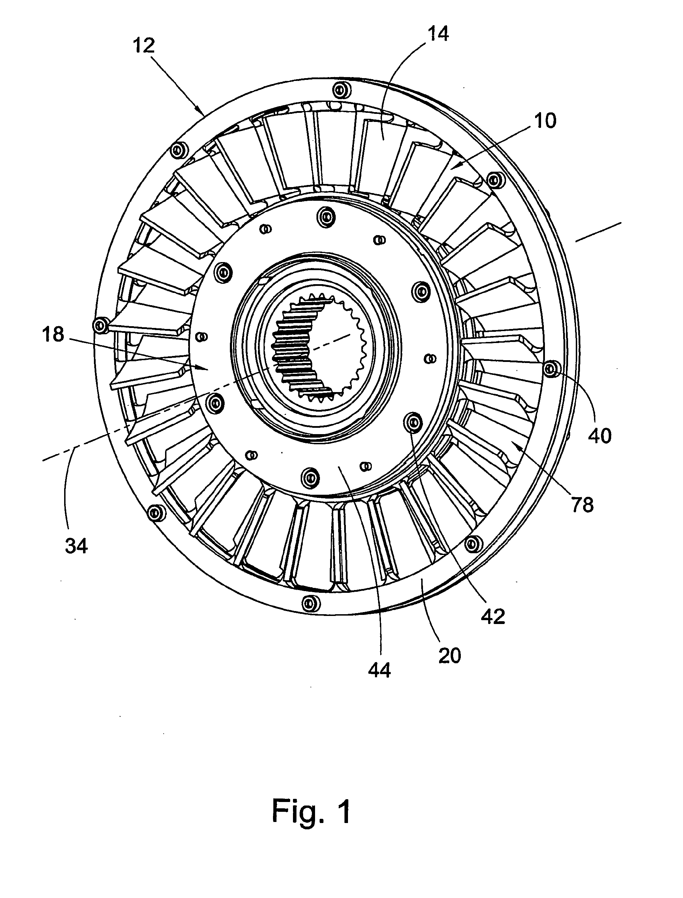

Fig. 1 ist eine perspektivische Vorderansicht eines Stators mit einer zweiteiligen Schaufel 10 gemäß der vorliegenden Erfindung.

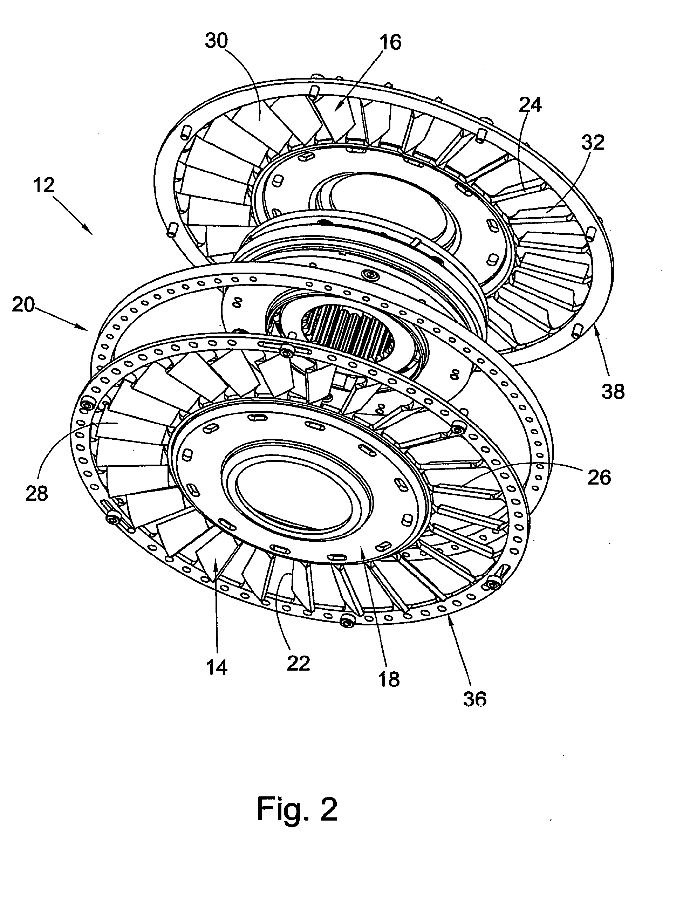

Fig. 2 ist eine Vorderansicht des Stators in Fig. 1 in Explosionsdarstellung.

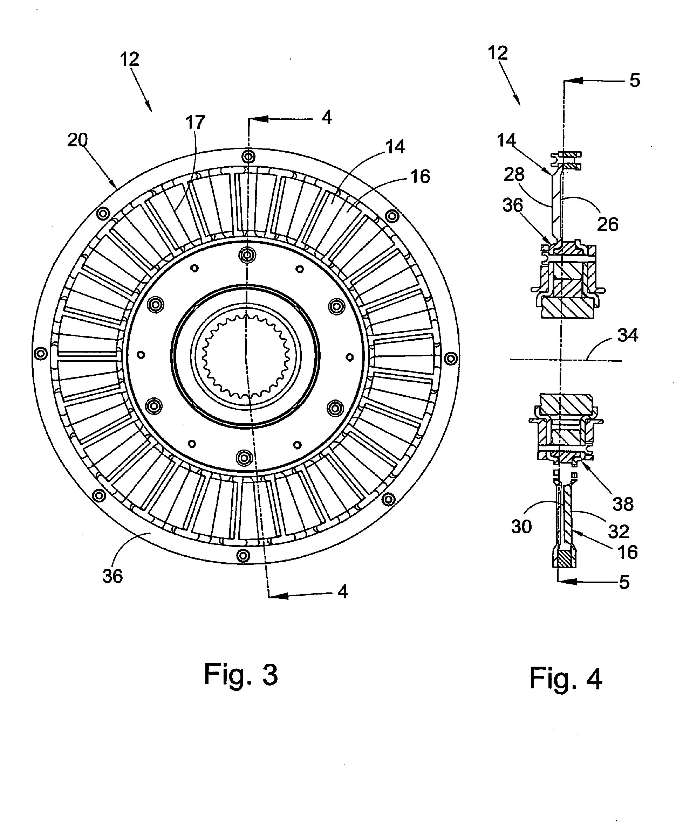

Fig. 3 ist eine Vorderansicht des Stators in Fig. 1.
Fig. 4 ist eine seitliche Querschnittsansicht des Stators in Fig. 3 entlang der Schnittlinie 4-4 in Fig. 3.

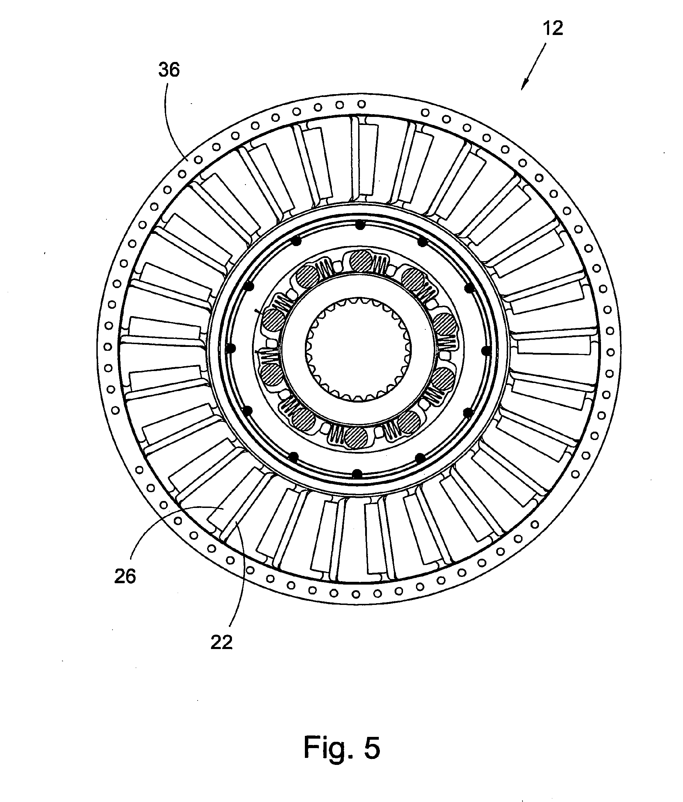

Fig. 5 ist eine Querschnittsansicht des Stators in Fig. 4 von hinten entlang der Schnittlinie 5-5 in Fig. 4. Die folgende Beschreibung ist in Verbindung mit den Figuren 1 bis 5 zu sehen. Im Stator 12 sind Schaufeln 10 dargestellt. Gemäß einigen Aspekten beinhaltet jede Schaufel 10 Schaufelsegmente 14 und 16. Die Segmente 14 und 16 sind getrennt gebildet. Das heißt, die Segmente 14 und 16 sind Einzelteile. Somit ist der Stator 12 mit "zusammengesetzten" Schaufeln gebildet, die wiederum aus zwei getrennten Teilen oder Segmenten gebildet sind. Die getrennten Teile oder Segmente können in der im Folgenden beschriebenen Weise miteinander verbunden, gekoppelt, in Kontakt gebracht, ausgerichtet oder angeordnet werden. Die Segmente 14 und 16 sind jeweils mit einem inneren Umfangsabschnitt 18 und einem äußeren Umfangsabschnitt 20 des Stators 12 verbunden. Das heißt, die Segmente sind zwischen den Abschnitten 18 und 20 durchgehend.

In den Figuren ist jede Schaufel 10 mit entsprechenden Segmenten 14 und 16 dargestellt. Es sollte jedoch klar sein, dass die vorliegende Erfindung nicht auf ein Verhältnis zwischen den Segmenten 14 und 16 von eins zu eins beschränkt ist. Das heißt, die Schaufeln 10 können mit unterschiedlichen Anzahlen von Segmenten 14 und 16 gebildet werden. Zum Beispiel kann eine bestimmte Anzahl von Schaufeln 16 sowohl mit den Segmenten 14 als auch mit den Segmenten 16, eine andere Anzahl von Schaufeln ausschließlich mit Segmenten 14 und noch eine andere Anzahl von Schaufeln ausschließlich mit Segmenten 16 gebildet werden.

Die Segmente 14 und 16 können auf vielfältige Weise angeordnet werden, um die Schaufel 10 zu bilden. Gemäß einigen Aspekten berühren sich die Segmente zum Beispiel entlang den in den Figuren 1 bis 3 gezeigten Linien 17. Zum Beispiel berühren sich die Segmente 14 und 16 entlang radialen Kanten 22 bzw. 24. Gemäß einigen Aspekten sind eine oder beide Kanten 22 und 24 keilförmig zugespitzt, wie im Folgenden beschrieben wird. Die Segmente 14 und 16 beinhalten radiale Flächen 26 und 28 bzw. 30 und 32. Gemäß einigen Aspekten überlappen sich entsprechende radiale Flächen der Segmente 14 und 16 zumindest teilweise, wie im Folgenden beschrieben wird. Gemäß einigen (nicht gezeigten) Aspekten sind die Segmente 14 und 16 über den Umfang hinweg nicht aufeinander ausgerichtet, wie im Folgenden beschrieben wird.

Bekanntlich können Statoren unter dem Gesichtspunkt von Leistungskenndaten betrachtet werden, darunter, aber nicht ausschließlich, das Drehmomentverhältnis, der Wirkungsgrad und die Leistung. Im Allgemeinen werden diese Kenndaten durch die Schaufeln des Stators, zum Beispiel durch die Anordnung der Schaufeln, beeinflusst. Aus diesem Grund können zur Änderung der Leistungskenndaten eines Stators mit den darin befindlichen Schaufeln 10 entsprechende Anordnungen von Schaufeln 10 und Schaufelsegmenten 14 und 16 gewählt werden. Die Anordnung der Schaufeln und Schaufelsegmente kann eine axiale Ausrichtung, eine radiaie Ausrichtung oder eine Ausrichtung über den Umfang hinweg betreffen. Von besonderem Interesse ist die Ausrichtung der Schaufeln in Bezug auf die zu erwartende Richtung des Flüssigkeitsstroms im Stator.

Gemäß einigen Aspekten beinhaltet der Stator 12 Hälften 36 und 38, zum Beispiel zwei axial voneinander getrennte Hälften, wie sie in der an denselben Anmelder abgetretenen US-Patentanmeldung mit dem Titel "Integral Stator and One-Way Clutch" von George et al., angemeldet am selben Tag wie die vorliegende Erfindung, beschrieben wird. Unter Hälften ist zu verstehen, dass die Struktur des Stators, insbesondere die Struktur, mit welcher die Schaufeln verbunden sind, im Wesentlichen durch Hälften 36 und 38 gebildet ist. Die Hälften 36 und 38 können auch als axiale Hälften oder axiale Abschlüsse bezeichnet werden. Mit anderen Worten, die Hälften 36 und 38 sind entlang einer radialen Ebene bezüglich der Achse 34 miteinander verbunden. Die Hälften sind jeweils aus Einzelteilen gebildet. Das heißt, die Hälften sind getrennt gebildet. Die Schaufelsegmente 14 sind mit der Hälfte 36 verbunden, und die Schaufelsegmente 16 sind mit der Hälfte 38 verbunden. Gemäß einigen Aspekten sind die Segmente als integraler Bestandteil mit der Hälfte 36 und die Schaufelsegmente 16 als integraler Bestandteil mit der Hälfte 38 gebildet. Zum Beispiel sind die Segmente 14 und die Hälfte 36 aus einem Stück Material gebildet.

Im Allgemeinen sind die Hälften miteinander verbunden und in axialer Richtung fixiert. Das heißt, die Hälften sind auf beliebige Weise miteinander verbunden und verschieben sich in axialer Richtung nicht gegeneinander. Gemäß einigen Aspekten sind die Hälften fest miteinander verbunden. Das heißt, die Hälften verschieben sich weder in axialer noch in Drehrichtung gegeneinander. Gemäß einigen Aspekten sind die Hälften so angeordnet, dass sie sich in Drehrichtung gegeneinander verschieben, wie im Folgenden beschrieben wird. In den Figuren 1 bis 4 werden zur Verbindung der Hälften Befestigungselemente 40 und 42 verwendet. Es sollte jedoch klar sein, dass zum Verbinden der Hälften andere Mittel verwendet werden können, wie sie zum Beispiel im Folgenden beschrieben werden, darunter, aber nicht ausschließlich, Niete, gefaltete Zungen, Schweißnähte, Klebstoffe und Sicken.

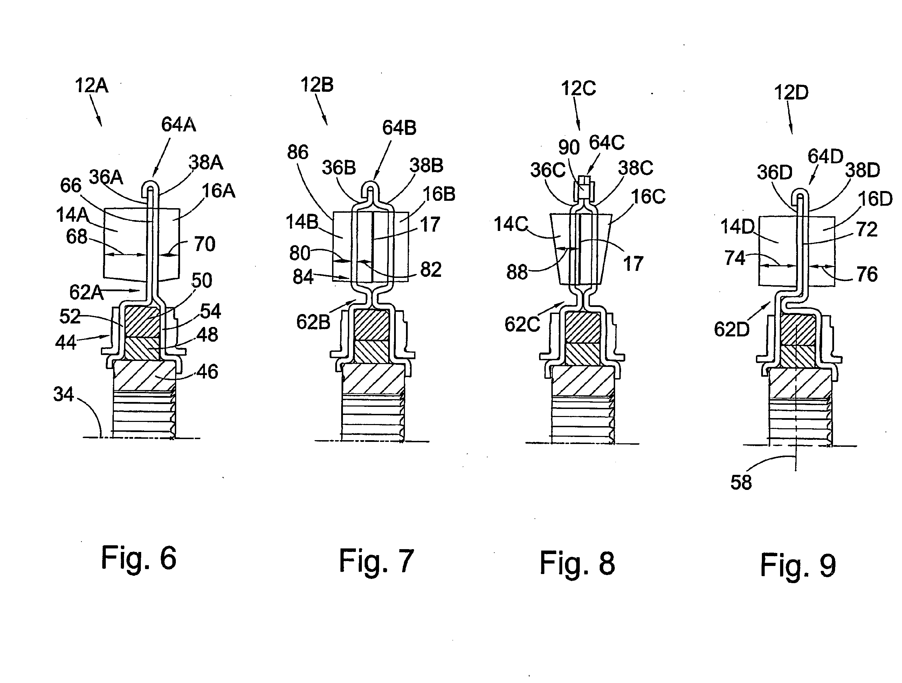

Die Figuren 6 bis 9 sind Teilquerschnittsansichten von Statoren mit Schaufeln gemäß der vorliegenden Erfindung, die Anordnungen von entsprechenden Statoren und Schaufeln zeigen. Die folgende Beschreibung ist in Verbindung mit den Figuren 1 bis 9 zu sehen. Gemäß einigen Aspekten sind die Hälften 36 und 38 so angeordnet, dass sie einen Teil einer Einwegkupplung 44 bilden, die in der an denselben Anmelder abgetretenen US-Patentanmeldung mit dem Titel "Stator and One-Way Clutch Assembly for a Torque Converter" von Hemphill et al., angemeldet am selben Tag wie die vorliegende Erfindung, beschrieben wird. Zum Beispiel beinhalten die Statoren 12A bis 12D eine Einwegkupplung 44 mit einem inneren Laufring 46, Walzen 48 und einen äußeren Laufring 50, wobei die Hälften 36 und 38 so angeordnet sind, dass sie axiale Abschlüsse 52 bzw. 54 der Kupplung bilden. Mit anderen Worten, die Abschlüsse 52 und 54 halten die Laufringe und die Walzen der Kupplung in axialer Richtung zusammen. Es sollte klar sein, dass die Verwendung anderer Einwegkupplungen in den Statoren in Geist und Geltungsbereich der beanspruchten Erfindung enthalten sind.

Die Schaufeln 10, die Segmente 14 und 16 sowie die Hälften 26 und 38 sind nicht auf eine bestimmte Anordnung, Form, Größe, Ausrichtung oder Verbindung beschränkt. In den Figuren 6 bis 9 bezieht sich die axiale Ausrichtung auf die radiale Linie 58 (die nur in Fig. 9 gezeigt ist, aber auch für die übrigen Figuren gilt), die in axialer Richtung durch die Mitte der Kupplung 44 geht. Im Allgemeinen sind entsprechende Hälften der Statoren 12 am inneren Umfangsbereich 62 und/oder am äußeren Umfangsbereich 64 befestigt.

In den Figuren 6 und 9 sind die Hälften 36A/38A und 36D/38D so gebildet, dass die Bereiche 62A und 62D in axialer Richtung außerhalb der Mitte liegen. Im Stator 12A berühren sich die Hälften 36A und 38A in axialer Richtung entlang der Linie 66, die in axialer Richtung außerhalb der Mitte liegt. Daraus folgt, dass die axiale Abmessung 68 größer ist als die axiale Abmessung 70, während eine allgemeine axiale Ausrichtung der Schaufeln 10 auf die Linie 58 erhalten bleibt. Diese Anordnung ist für solche Aspekte von Nutzen, bei denen es erwünscht ist, Aspekte der vorderen Teile der Schaufeln 10 zu betonen, zum Beispiel die Fläche des vorderen Teils zu vergrößern. Im Stator 12D ist die Linie 72 in axialer Richtung im Wesentlichen auf die Linie 58 ausgerichtet, und die Abmessung 74 ist ebenfalls größer als die Abmessung 76, sodass die vorderen Aspekte der Schaufeln 10 stärker betont werden.

In den Figuren 7 und 8 sind die Hälften im entsprechenden Ring des Stators, das heißt, im radialen Bereich, in welchem sich die Schaufeln befinden, in axialer Richtung voneinander getrennt. Der Ring 78 ist zum Vergleich in Fig. 1 dargestellt. Die Bereiche 62B und 64B sowie 62C und 64C sind in axialer Richtung im Wesentlichen auf die Linie 58 ausgerichtet. Eine Auswirkung der in den Figuren 7 und 8 gezeigten Anordnung besteht darin, dass die Schaufelsegmente, zum Beispiel 14B und 16C, an solchen Stellen mit den entsprechenden Hälften verbunden sind, die sich in axialer Richtung in der Mitte der entsprechenden Segmente befinden. Zum Beispiel sind die axialen Abmessungen 80 und 82 für das Segment 14B im Wesentlichen gleich. Durch eine solche Anordnung können die auf die Segmente einwirkenden Drehmomentkräfte (Kräfte, die ein Segment um eine radiale Linie verdrehen oder verwinden) verringert werden, indem der Abstand zwischen den Verbindungspunkten der Segmente und entsprechenden Kanten der Segmente, zum Beispiel der Abstand 80 zwischen dem Punkt 84 und der Kante 86 des Segments 14B, verringert wird. In Fig. 8 verjüngen sich die Segmente 14C und 16C in radialer Richtung. Zum Beispiel ist eine axiale Abmessung 88 des Segments 14C nahe dem Bereich 64C größer als nahe dem Bereich 62C. Es sollte klar sein, dass andere Arten und Stärken der Verjüngung der Schaufelsegmente in Geist und Geltungsbereich der beanspruchten Erfindung enthalten sind. Zum Beispiel kann die Abmessung 88 nahe dem Bereich 62C größer als nahe dem Bereich 64C sein.

Zum Verbinden der entsprechenden Hälften in den Bereichen 64 können beliebige in der Technik bekannte Mittel verwendet werden. Zum Beispiel zeigen die Figuren 6, 7 und 9 eine Faltverbindung, eine Zunge oder eine Sicke, während in Fig. 8 Niete 90 verwendet werden. Außerdem können auch andere Mittel verwendet werden, unter anderem auch Schweißnähte.

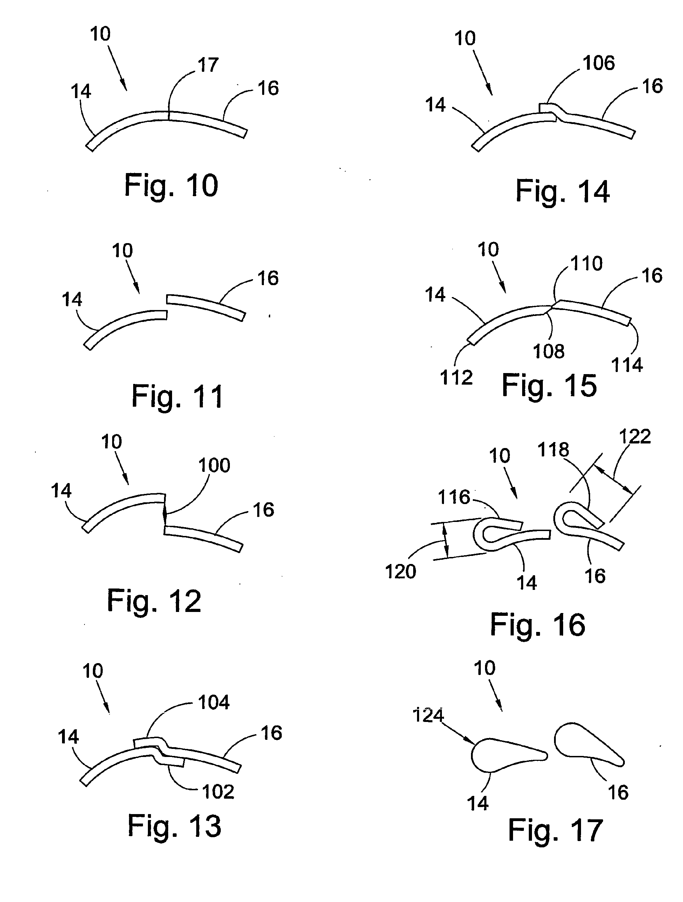

Die Figuren 10 bis 17 sind Draufsichten auf Schaufeln gemäß der vorliegenden Erfindung, die verschiedene Anordnungen der Schaufeln zeigen. Die folgende Beschreibung ist in Verbindung mit den Figuren 1 bis 17 zu sehen. Zur einfacheren Darstellung verwenden die verschiedenen in den Figuren 10 bis 17 gezeigten Kombinationen und Anordnung die Schaufel 10 und die Segmente 14 und 16 aus den Figuren 1 bis 5. Fig. 10 zeigt die Schaufel 10 mit den Segmenten 14, und 16, die in axialer Richtung entlang der Linie 17 miteinander verbunden sind. Diese Anordnung entspricht der Darstellung in den Figuren 1 bis 5. Die Figuren 11 und 12 zeigen die Segmente 14 und 16, die über den Umfang hinweg gegeneinander versetzt sind. Aus den Figuren 11 und 12 ist zu erkennen, dass das Segment 16 nach einer beliebigen Seite hin über den Umfang hinweg gegenüber dem Segment 14 versetzt sein kann. Es sollte klar sein, dass der Versatz in Bezug auf das Segment 16 als Bezugspunkt bezogen werden kann. Die Schaufel 10 ist nicht auf einen bestimmten Betrag des Versatzes 100 zwischen den Segmenten über den Umfang hinweg beschränkt.

Die Figuren 13 und 14 zeigen, wie die Segmente 14 und 16 durch eine Überlappung miteinander verbunden sind. Fig. 13 zeigt eine doppelte Überlappung. Das heißt, der Teil 102 des Segments 14 und der Teil 104 des Segments 16 sind bearbeitet oder verformt. Fig. 14 zeigt eine einfache Überlappung. Das heißt, nur der Teil 106 des Segments 16 ist bearbeitet oder verformt. Es sollte klar sein, dass die in den Figuren 13 und 14 gezeigte Überlappung in umgekehrter Richtung erfolgen kann, zum Beispiel kann eine einfache Überlappung durch Bearbeitung des Segments 14 gebildet werden. Die Schaufel 10 ist nicht auf ein bestimmtes Ausmaß oder eine bestimmte Anordnung der Überlappung beschränkt.

Fig. 15 zeigt Segmente 14 und 16 mit keilförmig angeschrägten Kanten 108 bzw. 110. Es sollte klar sein, dass auch andere Anordnungen von Segmenten keilförmig angeschrägte Kanten aufweisen können. Zum Beispiel kann in den Figuren 11 oder 14 das Segment 14 oder 16 keilförmig angeschrägt sein. Ferner sind in Fig. 15 auch andere Kombinationen von keilförmig angeschrägten Kanten möglich. Zum Beispiel können die Kanten 112 oder 114 keilförmig angeschrägt sein. Die Schaufel 10 ist nicht auf eine bestimmte Art der Anschrägung oder eine bestimmte Kombination von keilförmig angeschrägten Kanten beschränkt.

Fig. 16 zeigt eine Schaufel 10 mit zumindest teilweise gefalteten Segmenten 14 und 16. Zum Beispiel sind die Vorderkanten 116 und 118 der Segmente 14 bzw. 16 umgefaltet worden. Die Schaufel 10 ist nicht auf eine bestimmte Art, ein bestimmtes Ausmaß oder eine bestimmte Anordnung der Faltung beschränkt. Zum Beispiel können die Abmessungen 120 und 122 variiert werden. Ferner kann nur eines der Segmente 14 oder 16 in der Schaufel 10 gefaltet sein, während das andere Segment ungefaltet bleibt. Fig. 17 zeigt im Wesentlichen tropfenförmige Segmente, die durch Gießen oder Formgießen gebildet sind. Solche Segmente können in einer Vielfalt von Größen, Formen und Anordnungen gegossen werden, um Oberflächen 124 zu erzeugen, die zum Beispiel eine gewünschte Krümmung und Oberflächeneigenschaft aufweisen.

Gemäß einigen Aspekten kann der in den Figuren 11 und 12 gezeigte Versatz über den Umfang hinweg eingestellt werden. Zum Beispiel können zumindest Teile einer der beiden Hälften 36 und 38 oder beider Hälften über den umfang hinweg eingestellt werden. Die Einstellung erfolgt möglicherweise nicht automatisch. Zum Beispiel kann die Lage der Hälften 36 oder 38 zueinander in den Figuren 1 und 2 über den Umfang hinweg und somit die Ausrichtung der Segmente 14 und 16 in den Schaufeln 10 über den Umfang hinweg gewählt werden, indem eine oder beide Hälften bis zur gewünschten Ausrichtung gedreht und dann unter Verwendung von Befestigungselementen 40 und 42 befestigt werden.

Gemäß einigen (nicht gezeigten) Aspekten erfolgt die Einstellung automatisch. Das heißt, der Stator 12 beinhaltet ein automatisches Ausrichtungselement oder eine Einstelleinrichtung für mindestens einen Teil einer oder beider Hälften 36 und 38. Zur einfacheren Darstellung wird in der folgenden Erörterung die Einstellung für die Hälften beschrieben, jedoch sollte klar sein, dass diese Einstellung auch nur für einen Teil der entsprechenden Hälfte möglich ist. Die Einstelleinrichtung steuert die Drehung der Hälften (zur Änderung des Versatzes der Segmente 14 und 16 in den Schaufeln 10 über den Umfang hinweg) als Reaktion auf ausgewählte Steuerparameter. Gemäß einigen Aspekten ist die Einrichtung mechanischer Natur, zum Beispiel in Form eines Widerstandselements, das einen "aktiven" Widerstand entgegensetzt, um unter bestimmten Betriebsbedingungen im Stator einen bestimmten Versatz einzustellen. Wenn sich die Betriebsbedingungen im Stator ändern, ändern sich dem Widerstand entgegenwirkende Kräfte im Stator und bewirken eine Drehung der Hälften gegeneinander. Dadurch ändert sich auch der aktuelle Versatz zwischen den Schaufelsegmenten. Als Widerstandselement kommt zum Beispiel eine Feder infrage, wobei sich der Komprimierungsgrad der Feder in Abhängigkeit vom Flüssigkeitsdruck auf die Schaufeln des Stators ändert. Beispielsweise kann eine Erhöhung des Flüssigkeitsdruck zum Zusammendrücken der Feder führen. Als Widerstandselement kann eine beliebige in der Technik bekannte Widerstandseinrichtung verwendet werden.

Gemäß einigen Aspekten wird ein elektromechanisches Ausrichtungselement verwendet. Zum Beispiel sind mit den Hälften 36 und 38 elektrische Stellglieder oder elektromechanische Einrichtungen verbunden, die die Hälften als Reaktion auf Steuersignale drehen. Die Steuersignale können durch ein beliebiges in der Technik bekanntes Mittel erzeugt werden, darunter, aber nicht darauf beschränkt, Sensoren zur Messung von Parametern im Stator, zum Beispiel des Flüssigkeitsdrucks oder des Flüssigkeitsstroms, oder Sensoren zur Überwachung der Betriebsparameter einer Antriebseinheit oder einer angetriebenen Einheit für ein Fahrzeug, in welchem sich der Stator befindet.

Die Schaufeln 10, die Segmente 14 und 16 sowie die Hälften 36 und 38 werden durch Stanzen gebildet.

Somit ist zu erkennen, dass die Aufgaben der vorliegenden Erfindung wirksam gelöst werden, obwohl sich der Fachmann Modifikationen und Änderungen der Erfindung vorstellen kann, die in Geltungsbereich der beanspruchten Erfindung enthalten sind. Ferner ist klar, dass die vorhergehende Beschreibung nur zur Veranschaulichung der vorliegenden Erfindung dient und nicht als Einschränkung zu verstehen ist. Deshalb sind andere Ausführungsarten der vorliegenden Erfindung möglich, ohne von Geltungsbereich der vorliegenden Erfindung abzuweichen.

## Patentansprüche

1. Schaufel in einem Stator in einem Drehmomentwandler, die Folgendes umfasst:
ein erstes axiales Schaufelsegment, das als integraler Bestandteil erster innerer und äußerer Umfangsabschnitte des Stators gebildet ist;
und ein zweites axiales Schaufelsegment, das axial getrennt vom ersten Schaufelsegment und als integraler Bestandteil zweiter innerer und äußerer Umfangsabschnitte gebildet ist, wobei
das erste und das zweite axiale Schaufelsegment sowie die ersten und zweiten inneren und äußeren Umfangsabschnitte gestanzt sind und die erste und zweite innere und äußere Umfangsabschnitte einen Ring des Stators definieren und mit Befestigungselementen fest miteinander verbunden sind.

2. Schaufel nach Anspruch 1, bei der sich das erste und das zweite Schaufelsegment berühren.

3. Schaufel nach Anspruch 2, bei der das erste und das zweite Segment ferner entsprechende Kanten umfassen und sich das erste und das zweite Schaufelsegment entlang den entsprechenden Kanten berühren.

4. Schaufel nach Anspruch 3, bei der mindestens eine der entsprechenden Kanten keilförmig angeschrägt ist.

5. Schaufel nach Anspruch 2, bei der das erste und das zweite Schaufelsegment ferner entsprechende Flächen umfassen und sich die entsprechenden Flächen zumindest teilweise überlappen.

6. Schaufel nach Anspruch 1, bei der das erste und das zweite Schaufelsegment über den Umfang hinweg gegeneinander versetzt sind.

7. Schaufel nach Anspruch 1, wobei der Stator ferner Leistungskenndaten umfasst, das erste und das zweite Schaufelsegment entsprechende Anordnungen
einnehmen und die entsprechenden Anordnungen so gewählt sind, dass sie die Leistungskenndaten verändern.

8. Schaufel nach Anspruch 7, bei der als Leistungskenndaten unter anderem das Drehmomentverhältnis, der Wirkungsgrad und die Leistung gewählt werden.

9. Schaufel nach Anspruch 7, bei der als entsprechende Anordnungen unter anderem eine axiale Ausrichtung, eine radiale Ausrichtung und eine Ausrichtung über den Umfang hinweg gewählt werden.

10. Schaufel nach Anspruch 1, bei der das erste und das zweite Schaufelsegment über den Umfang hinweg ausgerichtet sind und der Stator ferner ein Ausrichtungselement umfasst, das funktionell so angeordnet ist, dass es die Ausrichtung über den Umfang hinweg steuert.

11. Schaufel nach Anspruch 10, wobei der Drehmomentwandler ferner eine Flüssigkeit umfasst und das Ausrichtungselement so angeordnet ist, dass es die Ausrichtung als Reaktion auf den Druck der Flüssigkeit auf die Schaufel steuert.

12. Schaufel nach Anspruch 1, wobei der Stator ferner eine erste axiale Hälfte und eine zweite axiale Hälfte umfasst und die erste und die zweite axiale Hälfte getrennt gebildet und fest miteinander verbunden sind, wobei das erste Schaufelsegment mit der ersten axialen Hälfte und das zweite Schaufelsegment mit der zweiten axialen Hälfte verbunden ist.

13. Schaufel nach Anspruch 12, bei der als feste Verbindung unter anderem Niete, gefaltete Zungen, Schweißnähte, Klebstoffe und Sicken gewählt werden.

14. Schaufel nach Anspruch 12, bei der das erste Schaufelsegment als integraler Bestandteil der ersten axialen Hälfte und das zweite Schaufelsegment als integraler Bestandteil der zweiten axialen Hälfte gebildet sind.

15. Schaufel nach Anspruch 12, wobei der Stator ferner eine Kupplung umfasst und die erste und die zweite axiale Hälfte so angeordnet sind, dass sie einen ersten bzw. einen zweiten Abschluss der Kupplung bilden.

16. Schaufel nach Anspruch 1, bei der das erste Schaufelsegment zumindest teilweise gefaltet ist.

17. Schaufel nach Anspruch 1, bei der das zweite Schaufelsegment zumindest teilweise gefaltet ist.

18. Schaufel nach Anspruch 1, die ferner Folgendes umfasst: eine Vielzahl von Schaufeln; und wobei das erste und das zweite Schaufelsegment ferner entsprechende Vielzahlen des ersten und des zweiten Schaufelsegments umfassen.

## Claims

1. Blade in a stator in a torque converter, the said blade comprising the following:
a first axial blade segment which is formed as an integral part of first inner and outer circumferential portions of the stator;
and a second axial blade segment which is formed axially separately from the first blade segment and as an integral part of second inner and outer circumferential portions,
the first and second axial blade segment and the first and second inner and outer circumferential portions being stamped, and the first and second inner and outer circumferential portions defining a ring of the stator and being fixedly connected to one another by means of fastening elements.

2. Blade according to Claim 1, in which the first and the second blade segment touch one another.

3. Blade according to Claim 2, in which the first and the second segment comprise, furthermore, corresponding edges, and the first and the second blade segment touch one another along the corresponding edges.

4. Blade according to Claim 3, in which at least one of the corresponding edges is bevelled in a wedge-shaped manner.

5. Blade according to Claim 2, in which the first and the second blade segment comprise, furthermore, corresponding faces, and the corresponding faces at least partially overlap one another.

6. Blade according to Claim 1, in which the first and the second blade segment are offset with respect to one another over the circumference.

7. Blade according to Claim 1, the stator comprising, furthermore, performance characteristic data, the first and the second blade segment assuming corresponding arrangements, and the corresponding arrangements being selected such that they vary the performance characteristic data.

8. Blade according to Claim 7, in which the performance characteristic data selected are, inter alia, the torque ratio, the efficiency and the performance.

9. Blade according to Claim 7, in which the corresponding arrangements selected are, inter alia, axial orientation, radial orientation and orientation over the circumference.

10. Blade according to Claim 1, in which the first and the second blade segment are oriented over the circumference, and the stator comprises, furthermore, an orientation element which is arranged functionally such that it controls the orientation over the circumference.

11. Blade according to Claim 10, the torque converter comprising, furthermore, a fluid, and the orientation element being arranged such that it controls the orientation as a reaction to the pressure of the fluid upon the blade.

12. Blade according to Claim 1, the stator comprising, furthermore, a first axial half and a second axial half, and the first and the second axial half being formed separately and being connected fixedly to one another, the first blade segment being connected to the first axial half and the second blade segment to the second axial half.

13. Blade according to Claim 12, in which the fixed connection selected comprises, inter alia, rivets, folded tongues, weld seams, adhesives and beads.

14. Blade according to Claim 12, in which the first blade segment is formed as an integral part of the first axial half and the second blade segment is formed as an integral part of the second axial half.

15. Blade according to Claim 12, the stator comprising, furthermore, a clutch, and the first and the second axial half being arranged such that they form respectively a first and a second closing piece of the clutch.

16. Blade according to Claim 1, in which the first blade segment is at least partially folded.

17. Blade according to Claim 1, in which the second blade segment is at least partially folded.

18. Blade according to Claim 1, which, furthermore, comprises the following: a multiplicity of blades; and the first and the second blade segment comprising, furthermore, corresponding multiplicities of the first and of the second blade segment.

## Revendications

1. Aube de turbine dans un stator d'un convertisseur de couple, qui comprend les éléments suivants:
- un premier segment d'aube axial, qui est réalisé sous forme de composant intégral de premières sections périphériques intérieures et extérieures du stator; et
- un deuxième segment d'aube axial, qui est axialement séparé du premier segment d'aube et qui est réalisé sous forme de composant intégral de deuxièmes sections périphériques intérieures et extérieures, dans laquelle
- le premier et le deuxième segments d'aube axiaux ainsi que les premières et les deuxièmes sections périphériques intérieures et extérieures sont estampés et les premières et les deuxièmes sections périphériques intérieures et extérieures définissent un anneau du stator, et sont solidairement assemblées les unes aux autres au moyen d'éléments de fixation.

2. Aube de turbine selon la revendication 1, dans laquelle le premier et le deuxième segments d'aube se touchent.

3. Aube de turbine selon la revendication 2, dans laquelle le premier et le deuxième segments comprennent en outre des côtés correspondants et le premier et le deuxième segments d'aube se touchent le long des côtés correspondants.

4. Aube de turbine selon la revendication 3, dans laquelle au moins un des côtés correspondants est biseauté en forme de coin.

5. Aube de turbine selon la revendication 2, dans laquelle le premier et le deuxième segments d'aube comprennent en outre des faces correspondantes et les faces correspondantes se recouvrent au moins en partie.

6. Aube de turbine selon la revendication 1, dans laquelle le premier et le deuxième segments d'aube sont décalés l'un par rapport à l'autre sur la périphérie.

7. Aube de turbine selon la revendication 1, dans laquelle le stator comprend en outre des données caractéristiques de puissance, le premier et le deuxième segments d'aube occupent des dispositions correspondantes et les dispositions correspondantes sont choisies de telle manière qu'elles modifient les données caractéristiques de puissance.

8. Aube de turbine selon la revendication 7, dans laquelle on choisit comme données caractéristiques de puissance, notamment le rapport de couple, le rendement et la puissance.

9. Aube de turbine selon la revendication 7, dans laquelle on choisit comme dispositions correspondantes, notamment une orientation axiale, une orientation radiale et une orientation par-dessus la périphérie.

10. Aube de turbine selon la revendication 1, dans laquelle le premier et le deuxième segments d'aube sont orientés par-dessus la périphérie et le stator comprend en outre un élément d'orientation, qui est disposé au point de vue fonctionnel de telle manière qu'il commande l'orientation par-dessus la périphérie.

11. Aube de turbine selon la revendication 10, dans laquelle le convertisseur de couple comprend en outre un liquide, et l'élément d'orientation est disposé de telle manière qu'il commande l'orientation en réaction à la pression du liquide sur l'aube de turbine.

12. Aube de turbine selon la revendication 1, dans laquelle le stator comprend en outre une première moitié axiale et une deuxième moitié axiale, et la première et la deuxième moitiés axiales sont formées séparément et sont solidairement assemblées l'une à l'autre, dans laquelle le premier segment d'aube est assemblé à la première moitié axiale et le deuxième segment d'aube est assemblé à la deuxième moitié axiale.

13. Aube de turbine selon la revendication 12, dans laquelle on choisit pour l'assemblage solidaire notamment des rivets, des lamelles pliées, des soudures, des colles et des sertissages.

14. Aube de turbine selon la revendication 12, dans laquelle le premier segment d'aube est réalisé sous la forme d'un composant intégral de la première moitié axiale et le deuxième segment d'aube est réalisé sous la forme d'un composant intégral de la deuxième moitié axiale.

15. Aube de turbine selon la revendication 12, dans laquelle le stator comprend en outre un couplage et la première et la deuxième moitiés axiales sont disposées de telle manière qu'elles forment une première ou une deuxième bride du couplage.

16. Aube de turbine selon la revendication 1, dans laquelle le premier segment d'aube est au moins partiellement plié.

17. Aube de turbine selon la revendication 1, dans laquelle le deuxième segment d'aube est au moins partiellement plié.

18. Aube de turbine selon la revendication 1, qui comprend en outre les éléments suivants: une multiplicité d'aubes, et dans laquelle le premier et le deuxième segments d'aube comprennent en outre des multiplicités correspondantes de premiers et de deuxièmes segments d'aube.
